(19) Europäisches Patentamt
European Patent Office
Office européen des brevets

(11) Veröffentlichungsnummer: **0 059 897**
**B2**

# (12) NEUE EUROPÄISCHE PATENTSCHRIFT

(45) Veröffentlichungstag der neuen Patentschrift: **15.02.89**

(51) Int. Cl.⁴: **C 07 F 9/38**

(21) Anmeldenummer: **82101475.0**

(22) Anmeldetag: **26.02.82**

## (54) Verfahren zur Herstellung von Alkalimetallsalzen der 1-Phosphonopropan-1,2,3-tricarbonsäure.

(30) Priorität: **05.03.81 DE 3108238**

(43) Veröffentlichungstag der Anmeldung:
**15.09.82 Patentblatt 82/37**

(45) Bekanntmachung des Hinweises auf die Patenterteilung:
**09.07.86 Patentblatt 86/28**

(45) Bekanntmachung des Hinweises auf die Entscheidung über den Einspruch:
**15.02.89 Patentblatt 89/7**

(84) Benannte Vertragsstaaten:
**AT BE CH DE FR GB IT LI NL SE**

(56) Entgegenhaltungen:
**DE-B-2 061 838**
**DE-B-2 333 151**
**US-A-4 042 650**

**Chemical Abstracts Band 92, Nr. 19, 12. Mai 1980, Columbus, Ohio, USA K.H. WORMS et al. "Syntheses of phosphonocarboxylic acids by Michael addition", Seite 612, Spalte 1,Abstract Nr. 164037t**
**"Berichte der deutschen chemischen Gesellschaft", Band 57 1924, VERLAG CHEMIE GMBH, Leipzig, Berlin, Seiten 1022-1039**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Blum, Helmut, Bertha- van- Suttner- Strasse 30, D-4000 Düsseldorf (DE)**
Erfinder: **Worms, Karl- Heinz, Dr., An der Jagengrenze 5, D-4000 Düsseldorf 13 (DE)**
Erfinder: **Plöger, Walther, Dr., Holbeinweg 11, D-4010 Hilden (DE)**

**EP 0 059 897 B2**

LIBER, STOCKHOLM 1989

**Beschreibung**

Gegenstand der Erfindung ist ein verbessertes Verfahren zur Herstellung von Alkalimetallsalzen der 1-Phosphonopropan-1,2,3-tricarbonsäure aus Phosphonoessigsäuretrialkylester und Maleinsäureester.

Es ist bekannt, 1-Phosphonopropan-1,2,3-tricarbonsäure beziehungsweise deren Alkalisalze durch Umsetzung von Maleinsäuredibutylester bei ungefähr 100° C mit Phosphonoessigsäuretriethylester in Gegenwart von Natriumalkoholatlösung herzustellen. Der bei dieser Umsetzung zunächst anfallende Ester wird hydrolysiert durch Kochen mit Salzsäure. Die dabei anfallende 1-Phosphonopropan-1,2,3-tricarbonsäure kann durch Zugabe von Alkalihydroxid wie Natriumhydroxid in das Natriumsalz der Säure überführt werden (Zeitschrift für anorganische und allgemeine Chemie, Band, 457 (1979), 219-223; vergleiche auch DE-B-2 333 151).

Der erforderliche Phosphonoessigsäuretriethylester (nachstehend auch als "PEE" bezeichnet) wird entweder gemäß der nachstehenden Gleichung (1)

FIG00/10

oder (2)

$$ClCH_2CO_2R + P(OR)_3 \rightarrow PEE$$

gewonnen

(Berichte der deutschen chemischen Gesellschaft, Band 57, (1924), 1023-1038).

Bei der Herstellung von PEE gemäß Formelschema (1) wird eine äquimolekulare Menge Natriumethylat benötigt. Das während der Reaktion anfallende NaCl ist schwierig abzutrennen und stellt einen die Umwelt belastenden Stoff dar. Wird PEE nach der Methode (2) gewonnen, so muß der Ester - wie auch bei (1) - durch eine Destillation gereinigt werden, da der Umsetzungsgrad bei der Umsetzung mit Maleinsäureester - wie sich gezeigt hat - stark von der Reinheit des PEE abhängig ist. Zudem ist die vollständige Hydrolyse des nach der Umsetzung von PEE mit Maleinsäureester gebildeten 1-Phosphonopropan-1,2,3-tricarbonsäureesters mittels einer Säure erfahrungsgemäß mit einem erheblichen Zeitaufwand verbunden.

Der vorliegenden Erfindung liegt die Aufgabe zugrunde, ein Verfahren zur Herstellung von Alkalimetallsalzen der 1-Phosphonopropan-1,2,3-tricarbonsäure zu entwickeln, bei dem die vorstehenden Nachteile vermieden werden. Dabei hat das erfindungsgemäße Verfahren den besonderen Vorteil, daß sich alle Umsetzungen mit hohen Ausbeuten und hohen Reinheitsgraden der gewonnenen Produkte im sogenannten Eintopfverfahren durchführen lassen.

Das erfindungsgemäße Verfahren ist dadurch gekennzeichnet, daß man im Eintopfverfahren zunächst Triethylphosphit mit Chloressigsäureethylester in äquimolaren Mengen zu PEE umsetzt, die flüchtigen Bestandteile durch Anlegen eines Vakuums entfernt und eine weitere Umsetzung durch Zugabe von Maleinsäuredimethylester beziehungsweise -diethylester in etwa molaren Mengen bezogen auf PEE in Gegenwart von Alkalimetallalkoholat als Katalysator durchführt, erneut die flüchtigen Produkte im Vakuum entfernt und das Reaktionsprodukt mit Alkalimetallhydroxid hydrolysiert, wobei man die bei der Hydrolyse eingesetzte Menge an Alkalimetallhydroxid - unter Berücksichtigung des bereits als Katalysator eingesetzten Alkalimetallalkoholats - auf das Trialkalimetallsalz oder das Tetra-alkalimetallsalz der 1-Phosphonopropan-1,2,3-tricarbonsäure berechnet.

Diese neue Arbeitsweise hat eine Reihe von Vorteilen. Der PEE-Ester wird aus äquimolekularen Mengen der Reaktionskomponenten gemäß Gleichung (2) in Ausbeuten bis zu 95 % gewonnen, wobei eine destillative Reinigung des Esters entfällt, indem bei der Umsetzung die Nebenprodukte durch Erhitzen im Vakuum bis kurz unterhalb des Siedepunktes des Esters bei entsprechendem Druck abgezogen werden. Der im Sumpf verbleibende Ester hat einen Reinheitsgrad von bis zu 99 %.

Die Anlagerung des Maleinsäuredimethylesters beziehungsweise -diethylesters an den Rohester aus Phosphonoessigsäuretriethyester erfolgt durch basisch katalysierte Reaktion, wobei als Basen Alkalimetallalkoholate Anwendung finden. Man erhält dabei Ausbeuten bis zu 92 %. Bevorzugt wird der Maleinsäuredimethylester eingesetzt.

Die hierbei in Frage kommenden Alkoholate leiten sich von $C_1$- bis $C_4$-Alkoholen ab.

Es ist vorteilhaft, bei der Herstellung des Natriumsalzes der Phosphonopropan-1,2,3-tricarbonsäure als Katalysator Natriumethylat einzusetzen..

Zur Hydrolyse des Reaktionsproduktes (Ester) werden als Alkalimetallhydroxide insbesondere Natrium-beziehungsweise Kaliumhydroxid eingesetzt. Hierbei hat es sich als zweckmäßig erwiesen, die Hydrolyse mit Natronlauge vorzugsweise im Konzentrationsbereich von 15 bis 25 % durchzuführen. Niedrigere NaOH-Konzentrationen sind zwar möglich, jedoch im allgemeinen wenig wirtschaftlich. Zu hohe Konzentrationen können zu lokalen Überhitzungen führen, die zersetzend wirken und eine intensive Kühlung erforderlich machen.

Zwecks vollständiger Hydrolyse wird bis auf einen Temperaturbereich von 100 bis 125° C, vorzugsweise 115° C, des Reaktionsgemisches erhitzt. Bei niederen Temperaturen dauert die Esterhydrolyse sehr lange, beziehungsweise sie verläuft unvollständig unter Bildung von Partialestern. Bei höheren Temperaturen kann es zu Zersetzung des Hydrolyseproduktes kommen.

Somit ermöglicht es das erfindungsgemäße

Verfahren, ohne Bildung unerwünschter Nebenprodukte und ohne den Einsatz überschüssiger Reaktionspartner - die einer Abtrennung bedürfen - in technisch einfacher Weise und mit nur geringem Zeitaufwand zu den erwünschten Alkalimetallsatzen der 1-Phosphonopropan-1,2,3-tricarbonsäure zu gelangen.

Falls erwünscht, läßt sich in bekannter Weise aus diesen Alkalimetallsalzen durch Behandlung mit einem sauren Ionenaustauscher die 1-Phosphonopropan-1,2,3-tricarbonsäure gewinnen. Die Säure sowie die Salze können aufgrund ihrer guten komplexbildenden Eigenschaften gegenüber Erdalkalimetallionen als Sequestrierungsmittel in allen entsprechenden technischen Anwendungsbereichen Verwendung finden.

**Beispiel 1**

1 Mol Chloressigsäureethylester und 1 Mol Triethylphosphat wenden in einer Rührrückflußapparatur mit aufsteigendem Kühler innerhalb von 15 Minuten auf 120 bis 130° C erwärmt. Anschließend wird die Reaktionstemperatur langsamer gesteigert, so daß nach circa 4 1/2 Stunden 175° C erreicht werden. Während dieser Zeit destilliert Ethylchlorid ab. Das Umsetzungsprodukt wird anschließend durch Erhitzen im Wasserstrahlvakuum bis auf 140° C und 15-minütigem Belassen bei dieser Temperatur von flüchtgen Anteilen befreit. Das auf diese Weise erhaltene Rohprodukt stellt eine hellgelbe Flüssigkeit mit einem Reinheitsgrad von rund 99 % dar. Die Ausbeute liegt zwischen 93 - 95 %.
Analyse:

C - gefunden - 42,4 ( - berechnet - 42,86)
H - gefunden - 7,42 ( - berechnet - 7,59)
P - gefunden - 13,5 ( - berechnet - 13,84)

Pro Mol des so erhaltenen Phosphonoessigsäuretriethylesters werden 1,06 Mol 95-%-iger Maleinsäuredimethylester zugesetzt und auf 40° C erwärmt. Dann werden 2,8 Molprozente Natriumethylatlösung zugetropft, wobei die Reaktionstemperatur bis auf 115 - 120° C ansteigt. Das auf circa 50° C heruntergekühlte Reaktionsgemisch wird dann bei etwa 1 Torr (0,75 mbar) bis auf 175° C erhitzt, wobei die flüchtigen Nebenprodukte abdestillieren.

Das verbleibende Reaktiorsgemisch wird unter Rühren und Kohlen mit 25-%-iger Natronlauge versetzt, wobei die eingesetzte Ätznatronmenge auf das Trinatriumsalz der Phosphonopropantricarbonsäure berechnet wird. Dann wird aufgeheizt wobei zuerst Alkohol, später Wasser abdestilliert, bis eine Sumpftemperatur von 115° C erreicht wird. Dann wird noch 2 Stunden bei dieser Tempratur belassen. Das Hydrolysat wird nach Verdünnen mit Wasser mit Aktivkohle aufgekocht) so daß nach Filtration über ein Filterhilfsmittel ein klares Filtrat erhalten wird. Dieses Filtrat kann nach Gehaltsbestimmung auf eine bestimmte Konzentration eingestellt werden oder man isoliert das Salz durch Fallen mit Methanol als festes Produkt. Die Ausbeute liegt bei 90 %.

Analyse:
Atomverhältnis P : C : Na =
1 : 6,19 : 2,93 - gefunden -
1 : 6 : 3 - berechnet -

**Beispiel 2**

Analog Beispiel 1 läßt sich auch der Diethylester der Maleinsäure mit PEE umsetzen. Die hierbei erzielten Reinheitsgrade und Ausbeuten entsprechen Beispiel 1.

**Patentanspruch**

Verfahren zur Herstellung von Alkalimetallsalzen der 1-Phosphonopropan-1,2,3-tricarbonsäure aus Phosphonoessigsäuretrialkylester und Maleinsäureester,
dadurch gekennzeichnet,
daß man im Eintopfverfahren
a) zunächst Triethylphosphit mit Chloressigsäureethylester in äquimolaren Mengen zu Phosphonoessigsauretriethyester (PEE) umsetzt und die flüchtigen Bestandteile durch Anlegen eines Vakuums entfernt,
b) anschließend eine weitere Umsetzung durch Zugabe von Maleinsäuredimethylester beziehungsweise -diethylester in etwa molaren Mengen bezogen auf PEE in Gegenwart von Alkalimetallalkoholat als Katalysator durchführt und erneut die flüchtigen Produkte im Vakuum entfernt,
c) anschließend das Reaktionsprodukt mit Alkalimetallhydroxid hydrolysiert, wobei man die bei der Hydrolyse eingesetzte Menge an Alkalimetallhydroxid - unter Berücksichtigung des bereits als Katalysator eingesetzten Alkalimetallalkoholats - auf das Trialkalimetallsalz oder das Tetra-alkalimetallsalz der 1-Phosphonopropan-1,2,3-tricarbonsäure berechnet.

**Revendication**

Procédé d'obtention de sels de métal-alcalin de l'acide 1-phosphonopropane-1,2,3-tricarboxylique à partir d'un ester trialcoylique de l'acide phosphonoacétique et d'ester d'acide maléïque, caractérisé en ce que dans un procédé en une seule étape:
a) d'abord on condense le phosphite de

triéthyle avec le chlororacétate d'éthyle en quantité équimolaire pour former l'ester triéthylique de l'acide phosphonoacétique (PEE) et on élimine les constituants volatils par mise en route du vide,

b) ensuite on exécute une nouvelle condensation par addition de maléate de diméthyle ou de diéthyle en quantités à peu près molaires rapportées à PEE en présence d'un alcoolate de métal alcalin comme catalyseur et à nouveau élimine les produits volatils sous vide,

c) ensuite on hydrolyse le produit de la réaction avec un hydroxyde de métal alcalin, grâce à quoi on calcule les quantités, mises en oeuvre pour l'hydrolyse, d'hydroxyde de métal alcalin - en prenant en compte l'alcoolate de métal alcalin déjà ajouté comme catalyseur, sur le sel trialcalin ou tétraalcalin de l'acide 1-phosphonopropane-1,2,3-tricarboxylique.

## Claim

A process for the production of alkali metal salts of 1-phosphonopropane-1,2,3-tricarboxylic acid from phosphonoacetic acid trialkyl ester and maleic acid ester,

characterized in that, using the one-pot technique,

a) triethyl phosphite is first reacted with chloroacetic acid ethyl ester in equimolar amounts to form phosphonoacetic acid triethyl ester (PEE), and the volatile constituents are removed by application of a vacuum,

b) a further reaction is subsequently carried out by adding maleic acid dimethyl ester or diethyl ester in about molar amounts, based on PEE, in the presence of alkali metal alcoholate as catalyst, and the volatile products are again removed in vacuo,

c) the reaction product is subsequently hydrolyzed with alkali metal hydroxide, wherein the amount of alkali metal hydroxide used in the hydrolysis is calculated for the tri-alkali metal salt or the tetra-alkali metal salt of the 1-phosphonopropane-1,2,3-tricarboxylic acid - while the alkali metal alcoholate already employed as catalyst is taken into account.